# EUROPEAN PATENT APPLICATION

(11) **EP 2 927 251 A1**
(43) Date of publication of application: **07.10.2015**
(21) Application number: 15164874.8
(22) Date of filing: 09.04.2012
(51) Int. Cl.: C08F 236/20, C08F 2/26, C08F 214/18, C08K 5/14, C08L 27/12, C08L 47/00

(54) **METHOD FOR PRODUCING FLUORINE-CONTAINING ELASTOMER**

(30) Priority: 11.04.2011 JP 2011086917
(62) Divisional of application: 12771208.1
(71) Applicant: Unimatec Co., Ltd., Tokyo 105-0012 (JP)
(72) Inventor: Murai, Daisuke, Kitaibaraki-shi Ibaraki 319-1544 (JP); Maeda, Mitsuru, Kitaibaraki-shi Ibaraki 319-1544 (JP)
(74) Representative: Beckmann, Claus

(57) **Abstract**

A peroxide-crosslinkable fluorine-containing elastomer is produced by subjecting a fluorine-containing olefin and a perfluoroalkyl divinyl ether monomer represented by the general formula:

CF₂-CF-[OCF₂CF(CF₃)]ₐO(CF₂)_{b}O[CF(CF₃)CF₂O]_{c}-CF=CF₂

wherein a+c is an integer of 0 to 4 and b is an integer of 2 or more, to a copolymerization reaction; wherein the total amount of the perfluorodivinyl ether monomer is added to the reaction system for copolymerization after the copolymerization reaction starts. A peroxide-crosslinked molded product of the obtained fluorine-containing elastomer exhibits high compression set characteristic, while reducing a decrease in breaking strength, a decrease in elongation at break or an increase in hardness.

## Description

### TECHNICAL FIELD

The present invention relates to a method for producing a fluorine-containing elastomer. More particularly, the present invention relates to a method for producing a fluorine-containing elastomer having excellent compression set characteristic.

### BACKGROUND ART

Compared to general-purpose elastomers, fluorine-containing elastomers are high-performance but expensive; thus, the field of their applications has been conventionally limited. However, applications of fluorine-containing elastomer products are recently increasing, particularly in the automobile industry, as performance demands, such as fuel sealing properties, heat resistance, and chemical stability, for various parts are increasing from the environmental aspects.

Moreover, in addition to applications for automobile parts, for general industrial machinery applications, semiconductor applications, and applications for O rings, oil seals, packings, gaskets, and the like for chemical plants, it is required to combine elasticity, heat-resistant chemical stability, chemical resistance, fuel resistance, etc. For this reason, various types of fluorine-containing elastomers are used.

Therefore, it is the fact that recent market demands are increasingly placed on fluorine-containing elastomers of higher-performance than existing fluorine-containing elastomers.

Compression set characteristic is regarded as a characteristic of fluorine-containing elastomer products, particularly one of important characteristics for seal applications. Compression set characteristic has great influence not only on seal performance but also on product life, etc.

Moreover, fluorine-containing elastomers show various different properties, depending on their copolymerization compositions. For molded products obtained by vulcanization molding of fluorine-containing elastomers, product performance can be balanced by devising various compounds, for example, fillers such as carbon black and crosslinking agents, to be compounded into the fluorine-containing elastomers; however, the actual circumstances are that it is difficult to fundamentally improve the performance of fluorine-containing elastomers themselves.

Furthermore, in North America, automobile products are required to have low fuel permeability from the environmental aspects together with its specific numerical targets; however, an attempt to achieve the above numerical targets by a conventional method, for example, by increasing fluorine contents, causes problems with adverse effects not only on compression set characteristic but also on depression of rubber elasticity.

As a method for improving compression set characteristic without changing fluorine contents and impairing rubber elasticity, the present applicant has previously proposed in Patent Documents 1 to 3 using a fluorine-containing divinyl ether compound monomer as a copolymerization component of a fluorine-containing elastomer. According to these inventions, the total amount of fluorine-containing divinyl ether compound monomer is initially added for copolymerization to the polymerization reaction system. In this case, the compression set characteristic of fluorine-containing elastomer molded products can be improved; however, product characteristics are adversely affected (e.g., decreased elongation at break or increased hardness).

In addition, Patent Documents 4 and 5 propose using a diolefin compound monomer as a copolymerization component of a fluorine-containing elastomer. According to these patent documents, compression set characteristic can be improved and mechanical strength can also be enhanced; however, the improvement in compression set characteristic is accompanied with changes not suitable for product characteristics such as increased hardness. Furthermore, diolefin compound monomers are disadvantageous from an economic standpoint, because they have in their hydrocarbon double bonds, which cause the copolymerization reaction rate to be slow and the copolymerization rate not to be high.

### PRIOR ART DOCUMENT

### PATENT DOCUMENT

Patent Document 1 : JP-A-2004-346087
Patent Document 2 : JP-A-2007-092076
Patent Document 3 : JP-A-2008-303321
Patent Document 4 : JP-B-3574198
Patent Document 5 : JP-B-4219492
Patent Document 6 : JP-B-58-4728
Patent Document 7 : JP-B-54-1585

### OUTLINE OF THE INVENTION

### PROBLEM TO BE SOLVED BY THE INVENTION

An object of the present invention is to provide a method for producing a fluorine-containing elastomer in which a divinyl ether compound monomer is copolymerized, whereby a molded product of the elastomer can exhibit high compression set characteristic, while reducing a decrease in breaking strength, a decrease in elongation at break or an increase in hardness.

### MEANS FOR SOLVING THE PROBLEM

The above object of the present invention can be achieved by a method for producing a peroxide-crosslinkable fluorine-containing elastomer, comprising subjecting a fluorine-containing olefin and a perfluoroalkyl divinyl ether monomer represented by the general formula:

CF₂=CF-[OCF₂CF(CF₃)]ₐO(CF₂)_{b}O[CF(CF₃)CF₂O]_{c}-CF=CF₂

wherein a+c is an integer of 0 to 4 and b is an integer of 2 or more, to a copolymerization reaction; wherein the perfluorodivinyl ether monomer is added for copolymerization separately before and after the copolymerization reaction starts, or the total amount thereof is added for copolymerization after the copolymerization reaction starts.

### EFFECT OF THE INVENTION

The fluorine-containing elastomer obtained by the method of the present invention has the following excellent effects: a peroxide-crosslinked molded product of the elastomer reduces a decrease in breaking strength, a decrease in elongation at break or an increase in hardness, and exhibits high compression set characteristic, for example, the compression set of the molded product in the form of an O ring at 200°C after 22 hours is 15% or less and the compression set of the molded product in the same form at 200°C after 70 hours is 20% or less.

### EMBODIMENTS FOR CARRYING OUT THE INVENTION

Examples of fluorine-containing olefins include vinylidene fluoride [VdF], hexafluoropropene [HFP], tetrafluoroethylene [TFE], perfluoroalkyl vinyl ether, perfluoroalkoxyalkyl vinyl ether, chlorotrifluoroethylene, difluorobromoethylene and the like. Examples of copolymers comprising these fluorine-containing olefins as main structural units include vinylidene fluoride-hexafluoropropene copolymers, vinylidene fluoride-hexafluoropropene-tetrafluoroethylene terpolymers, vinylidene fluoride-tetrafluoroethylene-perfluoroalkyl vinyl ether terpolymers, vinylidene fluoride-tetrafluoroethylene-perfluoroalkyl vinyl ether-perfluoroalkoxyalkyl vinyl ether tetrapolymers, tetrafluoroethylene-perfluoroalkyl vinyl ether copolymers, tetrafluoroethylene-perfluoroalkoxyalkyl vinyl ether copolymers and the like.

In the fluorine-containing elastomer, a perfluorodivinyl ether monomer is copolymerized in an amount of about 0.05 to 2 mol%, preferably about 0.1 to 1 mol%, based on the copolymer. When the copolymerization ratio is less than this range, the effect of improving compression set characteristic is not achieved. In contrast, when the copolymerization ratio is greater than this range, a decrease in elongation at break and an undesirable increase in hardness are observed.

Usable perfluorodivinyl ether monomers are those represented by the general formula:

CF₂=CF[OCF₂CF(CF₃)]ₐO(CF₂)_{b}O[CF(CF₃)CF₂0]_{c}CF-CF₂

wherein a+c is an integer of 0 to 4 and b is an integer of 2 or more; preferably a+c is an integer of 0 to 2 and b is 2. The total amount of such monomer is not supplied before the copolymerization reaction starts, but is generally added separately before and after the copolymerization reaction starts. The amount of perfluorodivinyl ether monomer added before the copolymerization reaction starts is 30 wt.% or less of the total amount of the monomer to be added. Alternatively, the total amount thereof may be added after the copolymerization reaction starts.

The divinyl ether monomer may be added separately before and after the copolymerization reaction start, or the total amount thereof may be added after the copolymerization reaction starts. It is preferable that the divinyl ether monomer is added before the copolymerization reaction starts and added in multiple batches after the copolymerization reaction starts; or that, while monitoring the progress of the polymerization reaction, the total amount of perfluorodivinyl ether monomer to be added is introduced in several batches each in a small amount so that the monomer is uniformly dispersed. More specifically, following examples are provided: (a) depending on the amount of main monomer added in batches, the perfluorodivinyl ether monomer is added so that the monomer is uniformly dispersed; or (b) depending on the amount of polymer produced, the perfluorodivinyl ether monomer is added so that the monomer is uniformly dispersed. Here, "before the copolymerization reaction starts" indicates before the addition of a polymerization initiator and "after the copolymerization reaction starts" indicates after the addition of the polymerization initiator.

As the former method (a), for example, every time the amount of main monomer added in batches and the amount of perfluorodivinyl ether monomer reacted get closer to the target copolymerization composition after the copolymerization reaction starts, an equivalent amount of perfluorodivinyl ether monomer is added in batches. As the latter method (b), for example, every time the produced polymer composition becomes the target copolymerization composition after the copolymerization reaction starts, an equivalent amount of perfluoroalkyl divinyl ether monomer is added in batches.

The former method (a) is suitable when copolymerization is performed while maintaining the reaction pressure at a constant level by introducing the main monomer with a uniform composition. The latter method (b) is suitable when the main monomer is introduced in one batch into the reactor and not added in batches thereafter, or in the case of a polymerization method in which a specified amount of monomer is introduced in batches, followed by aging to efficiently consume the residual monomer. Aging may be useful in terms of productivity, but may have adverse effects on the uniformity of the polymerization composition and physical properties. However, when a perfluorodivinyl ether monomer is introduced during aging or when a sufficient amount of perfluorodivinyl ether monomer is present in the reaction system during aging, undesirable characteristics such as ununiformity and deteriorated physical properties can be suppressed. Accordingly, as shown in Examples described later, fluorine-containing elastomers into which a perfluorodivinyl ether monomer is introduced so that the monomer is more uniformly dispersed show excellent normal-state physical properties including higher compression set characteristic, as compared to fluorine-containing elastomers obtained by introducing the total amount of perfluorodivinyl ether monomer into the reactor in one batch before polymerization.

The aforementioned Patent Document 3 discloses a copolymerization method using a divinyl ether monomer (a=0, b=2, c=1), wherein the total amount of divinyl ether monomer, which is used in a small amount, is added at once to the reaction system before the copolymerization reaction starts.

Further, the fluorine-containing elastomer preferably contains a saturated or unsaturated bromine- and/or iodine-containing compound in order to introduce a crosslinking site or to adjust the molecular weight of the fluorine-containing elastomer copolymer. Examples of such a bromine- and/or iodine-containing compound include compounds represented by the general formula: XRfX, wherein X is I or Br and Rf is a perfluoroalkylene group having 2 to 8 carbon atoms, such as ICF₂CF₂CF₂CF₂I, ICF₂CF₂CF₂CF₂Br, ICF₂CF₂Br; and the like (disclosed in Patent Document 6, etc.), and compounds represented by the general formula: RfX, wherein Rf is an unsaturated fluorohydrocarbon group having 2 to 8 carbon atoms and may have one or more ether bonds in the group and X is bromine or iodine, such as CF₂=CFOCF₂CF₂Br, CF₂=CFOCF₂CF(CF₃)OCF₂CF₂Br, CF₂=CFBr, CF₂=CHBr, CF₂=CFI, CF₂=CHI; and the like (disclosed in Patent Document 7, etc.). Among these, ICF₂CF₂CF₂CF₂I, CF₂=CFOCF₂CF₂Br, CF₂=CFI and CF₂=CHI are preferably used.

Such an iodine- and/or bromine-containing compound easily undergoes radical cleavage of iodine and/or bromine during the polymerization reaction by the action of an organic peroxide radical source. Because the produced radicals are highly reactive, the monomer undergoes additional growth reaction. Thereafter, the reaction is stopped by extracting iodine and/or bromine from the iodine- and/or bromine-containing compound. When a saturated iodine- and/or bromine-containing compound is used, a fluorine-containing elastomer in which iodine and/or bromine bind to the molecular end is produced.

The copolymerization reaction of a fluorine-containing monoolefin and a fluorine-containing diene compound in the presence of such a bromine- and/or iodine-containing compound for forming a crosslinking site is performed by a commonly-used random copolymerization reaction in the presence of a polymerization initiator.

The fluorine-containing elastomer can be produced by any method of emulsion polymerization, suspension polymerization or solution polymerization; however, emulsion polymerization is preferably employed in terms of economic efficiency and obtaining a high-molecular-weight copolymer.

Emulsion polymerization is carried out by using a water-soluble peroxide such as ammonium persulfate, potassium persulfate or sodium persulfate as a free radical generator. Such a water-soluble peroxide can be used also as a redox system concurrently using a reducing agent such as sodium sulfite or sodium bisulfite. Examples of emulsifiers include compounds represented by the general formula: Rf-COOH, wherein Rf is a fluorohydrocarbon group having 4 to 10 carbon atoms or a fluoroalkoxyalkyl group having 3 to 12 carbon atoms and having one or more ether bonds in the group. Specific examples thereof include ammonium perfluorooctanoate, ammonium perfluorononanoate, ammonium perfluoroheptanoate, ammonium salts and sodium salts of other fluorine-containing compounds and the like. In order to adjust the pH of the polymerization system, an electrolyte having a buffer capacity such as phosphate, for example, sodium hydrogen phosphate and potassium dihydrogen phosphate or borate can also be allowed to be coexist. The polymerization reaction is carried out under conditions where the temperature is 0 to 100°C and the pressure is 10 MPa or less.

The fluorine-containing elastomer obtained by the above reaction is cured by peroxide crosslinking method. Examples of organic peroxides usable in peroxide crosslinking method include 2,5-dimethyl-2,5-bis(t-butylperoxy)hexane, 2,5-dimethyl-2,5-bis(t-butylperoxy)hexyne-3, benzoyl peroxide, bis(2,4-dichlorobenzoyl)peroxide, dicumyl peroxide, di-t-butyl peroxide, t-butylcumyl peroxide, t-butylperoxy benzene, 1,1-bis(t-butylperoxy)-3,5,5-trimethylcyclohexane, 2,5-dimethylhexane-2,5-dihydroxyperoxide, α,α'-bis(t-butylperoxy)-p-diisopropylbenzene, 2,5-dimethyl-2,5-di(benzoylperoxy)hexane, t-butylperoxyisopropyl carbonate and the like; preferably, 2,5-dimethyl-2,5-bis(t-butylperoxy)hexane is used. The proportion of the organic peroxide is about 0.1 to 10 parts by weight, preferably about 0.5 to 5 parts by weight, based on 100 parts by weight of the fluorine-containing elastomer.

In peroxide crosslinking, a polyfunctional unsaturated compound co-crosslinking agent such as tri(meth)allyl isocyanurate, tri(meth)allyl cyanurate, triallyl trimellitate, N,N'-m-phenylene bismaleimide, diallyl phthalate; and the like is preferably used. The proportion of such a co-crosslinking agent is about 0.1 to 10 parts by weight, preferably about 0.5 to 5 parts by weight, based on 100 parts by weight of the fluorine-containing elastomer. Due to the combined use of a co-crosslinking agent, a vulcanizate having excellent vulcanization characteristic, mechanical strength, compression set characteristic and other properties can be obtained. When the proportion of co-crosslinking agent is less than this range, crosslinking density is low, and compression set characteristic is deteriorated. In contrast, when the proportion is greater than this range, elongation is lowered. The tri(meth)allyl group as used herein refers to a triallyl group or a trimethallyl group.

Further, a hydrotalcite compound, or an oxide or hydroxide of divalent metal, such as an oxide or hydroxide of calcium, magnesium, lead or zinc, is used as an acid acceptor. The proportion of such an acid acceptor is about 2 parts by weight or more, preferably 3 to 20 parts by weight, based on 100 parts by weight of the fluorine-containing elastomer. When the proportion of acid acceptor is less than this range, corrosion resistance to metal is impaired.

The above crosslinking-system components may be directly mixed with the fluorine-containing elastomer or may be used after being diluted with carbon black, silica, clay, talc, diatomaceous earth, barium sulfate or the like.

The composition comprising the above components may further contain, as necessary, other compounding agents such as reinforcing agents, fillers, processing aids, antioxidants, lubricants, plasticizers, pigments; and the like. When carbon black is used as a filler or a reinforcing agent, the proportion of carbon black is generally about 10 to 50 parts by weight, based on 100 parts by weight of the fluorine-containing elastomer. The addition of a bituminous fine powder can enhance compression set characteristic and extend the life of sealing materials, etc., because of improved heat resistance. The addition of a flat filler can improve fuel oil barrier properties and suppress evaporation of automotive fuel, etc., which are to be sealed.

The above components are kneaded by a commonly-used mixing method such as roll mixing, kneader mixing, Banbury mixing, solution mixing; and the like followed by vulcanization molding. Thereafter, the resulting mixture is generally subjected to press vulcanization at about 100 to 250°C for about 1 to 60 minutes and oven vulcanization (secondary vulcanization) at about 150 to 300°C for about 0 to 30 hours, according to commonly-used crosslinking conditions. Primary vulcanization can also be carried out by steam under pressure.

### EXAMPLES

The following describes the present invention with reference to Examples.

### Example 1

The following components were charged in a stainless steel autoclave having an internal volume of 10 L and equipped with stirring blades.

| | |
|---|---|
| CF₃CF₂CF_{2[}OCF(CF₃)CF_{2]}OCF(CF₃)COONH₄ (emulsifier) | 34 g |
| Na₂HPO₄·dodecahydrate (buffer) | 17 g |
| I(CF₂)₄I (chain transfer agent) | 27 g |
| Ion exchange water | 5,600 ml |

Then, the oxygen in the reactor was removed by replacement with nitrogen gas.

Subsequently, the following components were introduced.

| | |
|---|---|
| 1,1,2,2-tetrafluoro-1,2-bis[(trifluorovinyl)oxy]ethane CF₂=CFOCF₂CF₂OCF=CF₂ | 3 g |
| Perfluoromethyl vinyl ether CF₂=CFOCF₃ [PMVE] | 790 g |
| Gas mixture of VdF/TFE (87.5/12.5 mol%) | 670 g |

The temperature in the reactor was raised to 50°C. The pressure in the reactor when the temperature reached 50°C was 3.14 MPa·G. After it was confirmed that the temperature was stable, 1.0 g of ammonium persulfate and 0.1 g of sodium bisulfate, which were to form a redox system, were introduced into the reactor, and the polymerization reaction was initiated. When the pressure in the reactor reached 3.00 MPa·G, a monomer mixture of VdF/TFE/PMVE with a mixing ratio of 79.6/11.4/9.0 mol% was introduced and the pressure was increased to 3.10 MPa·G. During the polymerization reaction, the reaction pressure was maintained at 3.00 to 3.10 MPa·G by introducing the monomer mixture of the above composition.

7 g of CF₂=CFOCF₂CF₂OCF=CF₂ was introduced into the reactor three times when the added amount of the introduced monomer mixture reached 225 g, 680 g and 1,175 g. When the monomer mixture was introduced in a total amount of 1,410 g, the introduction of the monomer mixture was stopped. When the pressure became 0.20 MPa·G, the reactor was cooled and the polymerization reaction was stopped. It took 392 minutes from the start of supply of a polymerization initiator to the termination of the polymerization. 8,560 g of fluorine-containing elastomer latex was obtained as a reaction mixture.

The obtained fluorine-containing elastomer latex was put in the same amount of a 1 wt.% CaCl₂ aqueous solution to coagulate the latex. The aggregate was filtered and washed five times with a 5-fold amount of ion exchange water, followed by vacuum drying to obtain 2,500 g of a VdF/TFE/PMVE copolymer. The copolymerization composition of the obtained copolymer was VdF/TFE/PMVE/CF₂=CFOCF₂CF₂OCF=CF₂ = 73.5/9.6/16.7/0.2 mol% (measured by ¹⁹F-NMR).

### Comparative Example 1

In Example 1, the amount of CF₂-CFOCF₂CF₂OCF=CF₂ charged before the polymerization initiator was supplied was changed from 3 g to 24 g and CF₂=CFOCF₂CF₂OCF=CF₂ was not introduced after the polymerization initiator was supplied. The copolymerization composition of the obtained copolymer was VdF/TFE/PMVE/CF₂=CFOCF₂CF₂OCF-CF₂ = 73.4/9.6/19.8/0.2 mol%.

### Comparative Example 2

In Example 1, CF₂=CFOCF₂CF₂OCF=CF₂ was not used at all. The copolymerization composition of the obtained copolymer was VdF/TFE/PMVE = 73.6/9.7/16.7 mol%.

### Example 2

The following components were charged in a stainless steel autoclave having an internal volume of 10 L and equipped with stirring blades.

| | |
|---|---|
| CF₃CF₂CF₂(OCF(CF₃)CF₂)OCF(CF₃)COONH₄ (emulsifier) | 20 g |
| Na₂HPO4·dodecahydrate (buffer) | 5 g |
| I(CF₂)₄I (chain transfer agent) | 5 g |
| Ion exchange water | 5,000 ml |

Then, the oxygen in the reactor was removed by replacement with nitrogen gas.

Subsequently, the following components were introduced.

| | |
|---|---|
| 1,1,2,2-tetralluoro-1,2-bis[(trifluorovinyl)oxy]ethane CF₂=CFOCF₂CF₂OCF=CF₂ | 5 g |
| Hexafluoropropylene CF₂=CFCF₃ [HFP] | 750 g |
| Gas mixture of VdF/TFF (71/29 mol%) | 270 g |

The temperature in the reactor was raised to 70°C. The pressure in the reactor when the temperature reached 70°C was 2.65 MPa·G. After it was confirmed that the temperature was stable, 0.5 g of ammonium persulfate and 0.05 g of sodium bisulfate, which were to form a redox system, were introduced into the reactor, and the polymerization reaction was initiated. After a polymerization initiator was supplied, a monomer mixture of VdF/TFE/HFP with a mixing ratio of 53.0/21.7/25.3 mol% was introduced and the pressure in the reactor was increased to 3.00 MPa·G. During the polymerization reaction, the reaction pressure was maintained at 2.90 to 3.00 MPa·G by introducing the monomer mixture of the above composition (VdF/TFE/HFP = 53.0/21.7/25.3 mol%).

4 g of CF₂=CFOCF₂CF₂OCF=CF₂, 4 g of I(CF₂)₄I, 0.125 g of ammonium persulfate, 0.012 g of sodium bisulfite and 50 g of ion exchange water were introduced into the reactor four times when the added amount of the introduced monomer mixture reached 500 g, 880 g, 1,260 g and 1,640 g. When the monomer mixture was introduced in a total amount of 1,850 g, the introduction of the monomer mixture was stopped. When the pressure reached 1.80 MPa·G, the reactor was cooled and the polymerization reaction was stopped. It took 353 minutes from the start of supply of the polymerization initiator to the termination of the polymerization. 7,750 g of fluorine-containing elastomer latex was obtained as a reaction mixture.

In the same manner as in Example 1, the obtained fluorine-containing elastomer latex was coagulated, filtered, washed and dried to obtain 2,210 g of a VdF/TFE/HFP copolymer. The copolymerization composition of the obtained copolymer was VdF/TFE/HFP/CF₂=CFOCF₂CF₂OCF=CF₂ = 57.6/19.3/22.9/0.2 mol%.

### Comparative Example 3

In Example 2, the amounts of CF2=CFOCF₂CF₂OCF=CF2 and I(CF₂)₄I chain transfer agent added before the polymerization initiator was supplied were each changed from 5 g to 21 g, the amounts of ammonium persulfate and sodium bisulfite, which were redox system components to be introduced when the reaction started, were changed to 1 g and 0.1 g, respectively, and CF₂=CFOCF₂CF₂OCF=CF₂, I(CF₂)₄I and the redox system components were not introduced during the reaction. The copolymerization composition of the obtained copolymer was VdF/TFE/HFP/CF₂=CFOCF₂CF₂OCF=CF₂ = 57.7/19.4/22.8/0.1 mol%.

### Comparative Example 4

In Comparative Example 3, CF₂=CFOCF₂CF₂OCF=CF₂ was not used at all. The composition of the obtained copolymer was VdF/TFE/HFP = 57.6/19.4/23.0 mol%.

### Example 3

In Example 1, the method of charging CF₂=CFOCF₂CF₂OCF=CF₂ was changed such that the initial addition was omitted and 8 g was added three times during the divided addition. It took 388 minutes from the start of supply of the polymerization initiator to the termination of the polymerization. 8,571 g of fluorine-containing elastomer latex was obtained as a reaction mixture.

The fluorine-containing elastomer latex was coagulated to obtain 2,510 g of a fluorine-containing elastomer and the copolymerization composition thereof was

VdF/TFE/PMVE/CF₂=CFOCF₂CF₂OCF=CF = 73.4/9.5/16.0/0.2 mol%.

### Example 4

In Example 1, CF₂=CFOCF₂CF(CF₃)OCF₂CF₂OCF=CF₂ (a+c=1) was used in place of CF₂=CFOCF2CF₂OCF=CF₂, the amount of the divinylether monomer was changed such that the initial addition was 4.7 g and 11 g was added three times during the divided addition. It took 411 minutes from the start of supply of the polymerization initiator to the termination of the polymerization. 8,566 g of fluorine-containing elastomer latex was obtained as a reaction mixture.

The fluorine-containing elastomer latex was coagulated to obtain 2,495 g of a fluorine-containing elastomer and the copolymerization composition thereof was VdF/TFE/PMVE/CF₂=CFOCF₂CF(CF₃)OCF₂CF₂OCF=CF₂ = 73.6/9.6/16.6/0.2 mol%.

### Example 5

| | |
|---|---|
| Fluorine-containing elastomer obtained in Example 1 | 100 parts by weight |
| MT carbon black (N990, produced by Cancarb) | 37 parts by weight |
| Triallyl isocyanurate (TAIC M60, produced by Nippon Kasei Chemical Co., Ltd.) | 4 parts by weight |
| Organic peroxide (Perhexa 25B-40, produced by NOF Corporation) | 1.5 parts by weight |

The above components were mixed by an open roll and the obtained curable composition was subjected to press vulcanization at 180°C for 6 minutes to produce a sheet-like product (thickness: 2 mm) and an O ring (diameter: 3.5 mm). These resulting products were further subjected to secondary vulcanization (oven vulcanization) at 230°C for 22 hours.

### Comparative Example 5

In Example 5, the same amount of the fluorine-containing elastomer obtained in Comparative Example 1 was used in place of the fluorine-containing elastomer obtained in Example 1.

### Comparative Example 6

In Example 5, the same amount of the fluorine-containing elastomer obtained in Comparative Example 2 was used in place of the fluorine-containing elastomer obtained in Example 1.

### Example 6

In Example 5, the same amount of the fluorine-containing elastomer obtained in Example 3 was used in place of the fluorine-containing elastomer obtained in Example 1.

### Example 7

In Example 5, the same amount of the fluorine-containing elastomer obtained in Example 4 was used in place of the fluorine-containing elastomer obtained in Example 1.

The vulcanizates obtained in Examples 5 to 7 and Comparative Examples 5 and 6 were measured for the following items. Table 1 shows the obtained results.
Normal-state physical properties: According to JIS K6251 and 6253 corresponding to ISO 37 and 7619, respectively
Compression set: The compression set values of the O ring (diameter: 3.5 mm) at 200°C after 22 hours and 70 hours were measured according to JIS K6262 corresponding to ISO 815

**Table 1**

| **Measurement item** | **Ex. 5** | **Comp. Ex. 5** | **Comp. Ex. 6** | **Ex. 6** | **Ex. 7** |
|---|---|---|---|---|---|
| [Normal-state physical properties] | | | | | |
| Hardness (Duro A) | 75 | 76 | 75 | 75 | 76 |
| 100% modulus (MPa) | 10.1 | 7.7 | 5.7 | 9.8 | 11.1 |
| Breaking strength (MPa) | 24.4 | 21.5 | 18.8 | 23.5 | 26.6 |
| Elongation at break (%) | 210 | 150 | 240 | 180 | 230 |
| [Compression set] | | | | | |
| 200°C, 22 hrs (%) | 12 | 18 | 26 | 14 | 12 |
| 200°C, 70 hrs (%) | 17 | 26 | 34 | 19 | 18 |

### Example 8

| | |
|---|---|
| Elastomer obtained in Example 2 | 100 parts by weight |
| MT carbon black (N990, produced by Cancarb) | 30 parts by weight |
| Zinc oxide | 5 parts by weight |
| Triallyl isocyanurate (TAIC M60) | 4 parts by weight |
| Organic peroxide (Perhexa 25B-40) | 1 part by weight |

The above components were mixed by an open roll and the obtained curable composition was subjected to press vulcanization at 180°C for 10 minutes to produce a sheet-like product (thickness: 2 mm) and an O ring (diameter: 3.5 mm). These resulting products were further subjected to secondary vulcanization (oven vulcanization) at 200°C for 22 hours.

### Comparative Example 7

In Example 8, the same amount of the fluorine-containing elastomer obtained in Comparative Example 3 was used in place of the fluorine-containing elastomer obtained in Example 2.

### Comparative Example 8

In Example 8, the same amount of the fluorine-containing elastomer obtained in Comparative Example 4 was used in place of the fluorine-containing elastomer obtained in Example 2.

The vulcanizates obtained in Example 8 and Comparative Examples 7 and 8 were measured for their normal-state physical properties and compression set in the same manner as in Example 5.

**Table 2**

| **Measurement item** | **Ex. 8** | **Comp. Ex. 7** | **Comp. Ex. 8** |
|---|---|---|---|
| [Normal-state physical properties] | | | |
| Hardness (Duro A) | 70 | 70 | 69 |
| 100% modulus (MPa) | 5.7 | 6.1 | 4.0 |
| Breaking strength (MPa) | 25.1 | 21.7 | 21.0 |
| Elongation at break (%) | 280 | 250 | 270 |
| [Compression set] | | | |
| 200°C, 22 hrs (%) | 15 | 20 | 23 |
| 200°C, 70 hrs (%) | 20 | 24 | 28 |

## Claims

1. A method for producing a fluorine-containing elastomer, comprising subjecting a fluorine-containing olefin and a perfluorodivinyl ether monomer represented by the general formula:
CF₂=CF[OCF₂CF(CF₃)]ₐO(CF₂)_{b}O[CF(CF₃)CF₂O]_{c}CF-CF₂
wherein a+c is an integer of 0 to 4 and b is an integer of 2 or more, to a copolymerization reaction; wherein
the total amount of perfluorodivinyl ether monomer is added to the reaction system for copolymerization after the copolymerization reaction starts.

2. The method for producing a fluoroelastomer according to claim 1, wherein the perfluorodivinyl ether monomer is 1,1,2,2-tetrafluoro-1,2-bis[(trifluorovinyl)oxy] ethane.

3. The method for producing a fluorine-containing elastomer according to claim 1, wherein the perfluorodivinyl ether monomer is added to the reaction system in multiple batches after the copolymerization reaction starts.

4. The method for producing a fluorine-containing elastomer according to claim 1, wherein a+c in the general formula of the perfluorodivinyl ether monomer is an integer of 0 to 2.

5. The method for producing a fluorine-containing elastomer according to claim 1, wherein a+c in the general formula of the perfluorodivinyl ether monomer is 0.

6. A fluorine-containing elastomer produced by the method according to claim 1 comprising a copolymer of a fluorine-containing olefin and a perfluorodivinyl ether monomer represented by the general formula:
CF₂=CF[OCF₂CF(CF₃)]ₐO(CF₂)_{b}O[CF(CF₃)CF₂O]_{c}CF=CF₂
wherein a+c is an integer of 0 to 4 and b is an integer of 2 or more.

7. A peroxide-crosslinkable fluorine-containing elastomer composition comprising the fluorine-containing elastomer according to claim 6 and an organic peroxide as essential components.
